# EUROPÄISCHE PATENTSCHRIFT

(11) **EP 1 215 435 B1**
(45) Veröffentlichungstag und Bekanntmachung des Hinweises auf die Patenterteilung: **29.01.2003**
(21) Anmeldenummer: 01126813.3
(22) Anmeldetag: 10.11.2001
(51) Int. Cl.: F16L 55/132, F16L 55/136

(54) **Stopfen zur innenseitigen Rohrabdichtung**
Pipe plug
Bouchon obturateur pour un tuyau

(30) Priorität: 12.12.2000 DE 10061832
(43) Veröffentlichungstag der Anmeldung: 19.06.2002
(73) Patentinhaber: Bardenhagen, Helmut, 21684 Stade (DE)
(72) Erfinder: Bardenhagen, Helmut, 21684 Stade (DE)
(74) Vertreter: Hansen, Jochen

(56) Entgegenhaltungen:
- DE-A- 4 213 732
- GB-A- 575 397
- US-A- 3 618 811
- US-A- 5 437 310

## Beschreibung

Die Erfindung betrifft einen Stopfen zur innenseitigen Abdichtung eines Rohres, insbesondere Wärmetauscherrohres, sowie ein Arbeitsverfahren zum dichtenden Einsetzen eines derartigen Stopfens in ein Rohr.

Diese Stopfen dienen insbesondere zur Abdichtung einzelner leckgeschlagener Rohre in einem Wärmetauscher. Derartige Wärmetauscher weisen einen Wärmetauscherbehälter mit darin angeordneten Wärmetauscherrohren auf. Die Wärmetauscherrohre sind dabei meist in einem Bündel zwischen zwei Rohrplatten angeordnet. Jedes Wärmetauscherrohr ist in der jeweils zugeordneten Aufnahmebohrung der Rohrplatte dichtend aufgewalzt und/oder verschweißt. Der Austausch eines einzelnen Wärmetauscherrohres ist daher sehr aufwendig.

Um bei Undichtigkeiten in einem Wärmetauscherrohr, beispielsweise aufgrund von Korrosionsschäden oder Mikrorissen, einen langen Betriebsausfall des Wärmetauschers zu vermeiden, ist es bekannt, das undichte Wärmetauscherrohr durch Stopfen vom übrigen Wärmetauschermediumkreislauf abzutrennen. Der abgetrennte Wärmetauscherrohrstrang füllt sich folglich beim späteren Betrieb mit dem zwischen den Rohrplatten durchströmenden Medium des Wärmetauscherbehälters. Trotz Druckunterschieden und thermischen Wechsellasten müssen die Abdichtstopfen sicher und dauerhaft dichtend im Rohrstrang verankert bleiben.

Neben paßgenauen Stopfen, die von außen in die Rohröffnung eingetrieben werden, ist beispielsweise aus der WO 85/04235 eine Stopfenanordnung bekannt, bei der eine topfartige Dichthülse mit einem darin angeordneten konischen Element dichtend aufgeweitet werden kann. Das konische Element wird mit einer Zugeinrichtung, beispielsweise über ein Gewinde, gleitend in einem Keilring nach außen gezogen, wobei sich die topfartige Dichthülse dichtend mit der Rohrinnenseite verpreßt.

Einen ähnlichen Aufbau weist ein Verschlußstopfen für Wärmeaustauscherrohre gemäß DE 38 26 597 A1 auf, bei dem ein Gehäuse als einseitig offener hohler bzw. topfförmiger Körper ausgebildet ist. Das topfförmige Gehäuse weist eine konische Bohrung und eine Gewinde-Sacklochbohrung auf. Ferner ist ein Einsatzelement mit einem Gewindezapfen, der in die Gewinde-Sacklochbohrung einschraubbar ist, und mit einem Außenkonus, passend zur Konusbohrung des Gehäuses, vorgesehen.

Nachteilig an diesen beiden Vorrichtungen ist, daß sie aus einer Vielzahl von aufwendig herzustellenden Bauteilen bestehen und somit kostenaufwendig sind.

Eine vereinfachte Konstruktion des gleichen Grundprinzips ist aus der US 5,437,310 bekannt, bei der lediglich ein aufweitbares Hülsenelement mit einem darin geführten konischen Element vorgesehen ist. Durch axiales Versetzen des konischen Elements mittels einer außen angebrachten Zugeinrichtung wird das aufweitbare Hülsenelement, dichtend in der Rohrinnenseite und der konischen Außenfläche des länglichen Elements verpreßt.

Nachteilig bei den vorgenannten Stopfenanordnungen ist jedoch, daß während längeren Betriebes des Wärmetauschers unter thermischen Wechsellasten eine Lockerung des Stopfens möglich ist, womit eine unerwünschte Leckage entstehen könnte. Darüber hinaus besteht bei plötzlichen Druckdifferenzen die Gefahr, daß die Stopfenvorrichtung geschoßartig aus dem Rohr ausgepreßt wird. Dies kann neben der unerwünschten Verbindung der Wärmetauscherkreisläufe zu einer erheblichen Beschädigung und Gefährdung des Wärmetauscherbetriebes sowie etwaiger Bedien- oder Wartungspersonen führen.

Ferner ist aus der DE 42 13 732 A1 ein Verschlußstück zum Abschließen von Druckmittel führenden Bohrungen bekannt, bei der eine mit Konus arbeitende Spanneinrichtung einen 0-Ring verpreßt und sich dichtend an die Innenwand der Bohrung anlegt. Dabei bilden radial in die Innenwand der Bohrung eindringende Schneidkanten von federnden Spannarmen eine formschlüssige Halterung.

Aufgabe der Erfindung ist es daher, die aus der US 5,437,310 bekannte Stopfenanordnung so weiterzubilden, daß auch nach vielfachen thermischen Wechsellasten und plötzlich auftretenden Druckunterschieden ein Lösen des Stopfens vermieden und die Dichtigkeit der Stopfenabdichtung gewährleistet wird.

Gelöst wird diese Aufgabe mit einer Vorrichtung gemäß Patentanspruch 1. Ein Arbeitsverfahren zum dichtenden Einsetzen eines derartigen Stopfens in ein Rohr ist in Patentanspruch 9 angegeben.

Durch das Vorsehen eines im Rohr mit geringfügigem Spiel einführbaren Flansches am breiteren Ende des konischen Elementes und dem Einfügen eines hülsenartigen Schneidringes zwischen dem Flansch und der Abdichtbuchse wird beim axialen Spannen des konischen Elementes eine zweite Abdichtung durch Einschneiden oder Einpressen des Schneidringes im Bereich des Flansches in die Rohrinnenseite angegeben.

Neben der im wesentlichen reibschlüssigen Verbindung und Abdichtung durch die aufgeweitete und eingepreßte Dichtbuchse wird mit dieser zweiten Abdichtung eine Umfangslinienbelastung auf die Rohrinnenseite bewirkt, die auch eine formschlüssige Haltekomponente durch das linienförmige Einschneiden des Schneidringmaterials erlaubt. Dabei wirkt bei sehr starkem Überdruck im Rohrinneren die Konstruktion entsprechend der auf die Flanschquerschnittsfläche wirkenden Druckkraft selbstabdichtend.

Dadurch, daß der Schneidring eine im wesentlichen zylindrische Außenseite und eine sich konisch zum Flansch aufweitende kegelstumpfförmige Innenseite aufweist, womit der Ring ein dünnwandiges Ende am Flansch und gegenüberliegend ein dickwandiges Ende hat, wird das dichtende Aufweiten und Einschneiden des dünnwandigen Endes beim Stauchen des hülsenartigen Schneidringes zwischen Flansch und Abdichtbuchse verstärkt.

Wenn der Flansch eine gerundete Auflaufkante für das dünnwandige Ende des Schneidringes aufweist, wird die Aufweitung des Schneidringes durch den Flansch bis zur Anlage an die Innenseite des Rohres unterstützt, was zu einer Verringerung der erforderlichen Zugkräfte zur Aufweitung und Eindichtung führt.

Wenn der Schneidring am dickwandigen Ende an der Stirnfläche der Abdichtbuchse anliegt, wird eine Abstützung des Schneidringes zwischen Abdichtbuchse und Flansch erreicht, wobei durch die großflächigere Ausbildung der Kontaktfläche zwischen Schneidring und Abdichtbuchse eine Verformung an dieser Stelle weitestgehend vermieden wird.

Alternativ kann der Schneidring und die Abdichtbuchse einstückig ausgebildet werden, womit ein unerwünschtes Aufwölben des Schneidringes am Kontaktbereich zur Abdichtbuchse vermieden wird. Ferner können so die Herstellungskosten für den Stopfen verringert werden.

Wenn der Schneidring oder der Schneidring und die Abdichtbuchse aus elastisch deformierbarem Material mit gegenüber der Festigkeit des konischen Elementes geringerer Festigkeit hergestellt sind, wird die dichtende Deformation an den entsprechenden Kontaktbereichen an den gewünschten Elementen unter Vermeidung einer Deformation des konischen Elementes hervorgerufen.

Dadurch, daß die Abdichtbuchse auf ihrer Innenseite wenigstens eine in der Radialebene umlaufende Nut aufweist, wird die Dichtwirkung beim Ausüben der Keilwirkung durch Verschieben des konischen Elementes verbessert. Dies gilt auch für den Kontaktbereich zwischen Abdichtbuchsenaußenseite und Rohrinnenseite.

Das axiale Verschieben des konischen Elementes wird bevorzugt mit einer hydraulischen Zugvorrichtung ausgeführt.

Das Abdichtverfahren wird dadurch weitergebildet, daß die Zugkraft beim axialen Verschieben bis zu einer Maximallast aufgebracht wird. Dies wird beispielsweise an der Zugvorrichtung voreingestellt oder durch eine Sollbruchstelle an der Zugverbindung zwischen länglichem Element und Zugvorrichtung erreicht.

Nachfolgend wird ein bevorzugtes Ausführungsbeispiel der Erfindung anhand der beiliegenden Zeichnungen detailliert beschrieben.

Darin zeigt:
- Fig. 1: eine teils geschnittene Ansicht eines erfindungsgemäßen Dichtstopfens und
- Fig. 2: der in Fig. 1 dargestellte Abdichtstopfen eingesetzt und verpreßt in einem Wärmetauscherrohr in geschnittener Seitenansicht.

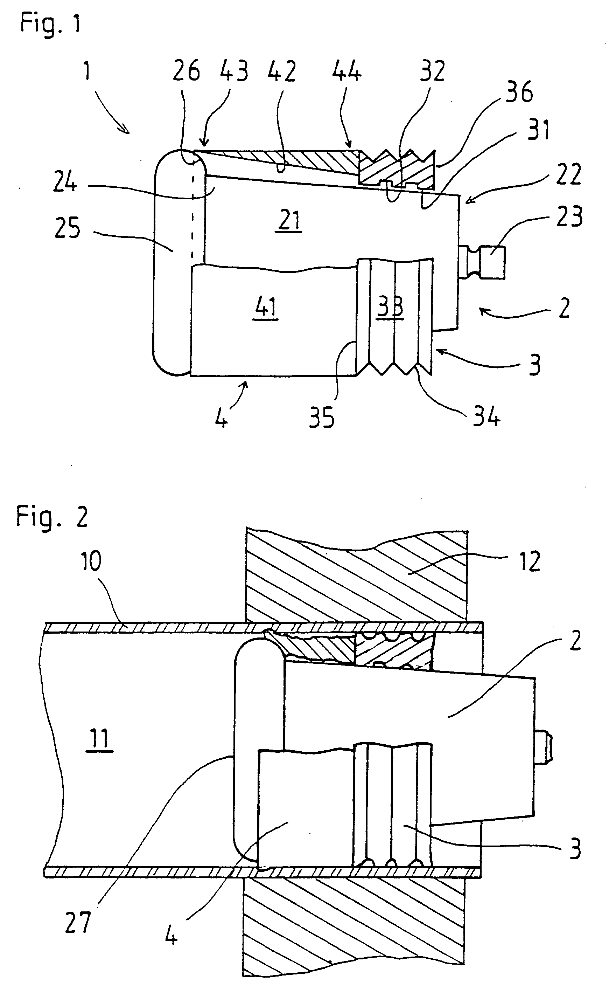

In Fig. 1 ist eine teils geschnittene Ansicht eines Stopfens 1 zur innenseitigen Abdichtung eines Rohres dargestellt. Der Stopfen 1 besteht aus einem länglichen Element 2, einer Abdichtbuchse 3 und einem Schneidring 4.

Das längliche Element 2 weist eine fast zylindrische, konische Außenfläche 21 auf, auf der die Abdichtbuchse 3 mit ihrer Innenfläche 31 gleitend geführt ist. Am schlankeren Ende 22 der konischen Außenfläche 21 des länglichen Elementes 2 ist eine Kuppelelement 23 zum Ansetzen einer Zugvorrichtung vorgesehen. Das Kuppelelement 23 besteht beispielsweise aus einem Gewindeabschnitt mit einer Sollbruchstelle, so daß unabhängig von der eingesetzten Zugeinrichtung eine maximale Zugkraft beim axialen Verschieben des länglichen Elementes 2 relativ zur Abdichtbuchse 3 und Schneidring 4 sowie dem abzudichtenden Rohr 10 nicht überschritten wird.

Am anderen, größeren Durchmesser aufweisenden Ende 24 der konischen Außenfläche 21 des länglichen Elementes 2 ist ein Flansch 25 ausgebildet. Der Flansch 25 weist einen gegenüber dem Innendurchmesser des abzudichtenden Rohres 10 geringfügig geringeren Außendurchmesser auf. Die Flanschaußenkanten 26 sind gerundet.

Die auf der konischen Außenfläche 21 geführte Abdichtbuchse 3 weist an ihrer Innenseite 31 zwei umlaufende Nuten 32 auf. Der Außendurchmesser der Abdichtbuchse 3 ist geringfügig kleiner als der Innendurchmesser des abzudichtenden Rohres 10. Auf der Außenseite 33 der Abdichtbuchse sind im dargestellten Ausführungsbeispiel drei umlaufende Nuten 34 vorgesehen.

Zwischen Abdichtbuchse 3 und Flansch 25 des länglichen Elements 2 ist der Schneidring 4 eingefügt. Der Schneidring 4 weist eine zylindrische Außenseite 41, die geringfügig kleineren Durchmesser als die Rohrinnenseite 11 hat, und eine sich konisch zum Flansch 25 aufweitende kegelstumpfförmige Innenseite 42 auf. Der Schneidring 4 weist somit ein dünnwandiges Ende 43 am Kontaktbereich mit dem Flansch 25 und ein dickwandiges Ende 44 am Kontaktbereich zur Abdichtbuchse 3 auf. Das dickwandige Ende 44 liegt dabei flächig an der kreisringförmigen Stirnfläche 35 der Abdichtbuchse 3 an.

Nachfolgend wird die funktionsweise des Stopfens 1 bei Montage in einem Rohr 10 anhand der Fig. 2 erläutert.

Der Stopfen 1 wird von der frei zugänglichen Seite einer Rohrplatte 12 in das abzudichtende Rohr 10 eingeführt. Das Rohr 10 ist in der Rohrplatte 12 dichtend aufgewalzt. Bevorzugt sollte der Stopfen 1 im Bereich der Rohrplattendurchführung gesetzt werden.

An dem Kuppelelement 23 ist eine nicht dargestellte Zugvorrichtung angekoppelt, die sich an der äußeren Stirnfläche 36 der Abdichtbuchse 3 abstützt. Bei Betätigung der Zugvorrichtung, die beispielsweise hydraulisch aktivierbar ist, wird das keilartige längliche Element 2 axial in Richtung zur Zugvorrichtung verschoben. Dabei gleitet die konische Außenfläche 21 an der Innenseite 31 der Abdichtbuchse 3 entlang, wobei durch die konische Außenfläche eine zunehmende Keilwirkung, also eine Aufweitung der aus einem weicherem Material hergestellten Abdichtbuchse 3 erreicht wird.

Gleichzeitig wird durch das axiale Verschieben des länglichen Elementes 2 und damit abnehmendem Abstand zwischen Flansch 25 des länglichen Elementes 2 und Stirnfläche 35 der Abdichtbuchse 3 der Schneidring 4 in axialer Richtung gestaucht. Dabei stützt sich das dickwandige Ende 44 des Schneidringes 4 an der Stirnfläche 35 der Abdichtbuchse 3 flächig ab, so daß hier im wesentlichen keine Deformation auftritt. Demgegenüber wird das dünnwandige Ende 43 des Schneidringes 4 vom Flansch 25 unterstützt durch die gerundete Flanschkante 26 in den Ringspalt zwischen Flansch 25 und Rohrinnenseite 11 gepreßt.

Bei weiterer Erhöhung der Zugkraft durch die Zugvorrichtung und axiales Verschieben des länglichen Elementes 2 wird die Abdichtbuchse 3 unter Deformation insbesondere der darin ausgebildeten Nuten 32 und 34 dichtend zwischen dem keilartigen Element 2 und der Rohrinnenseite 11 verpreßt. Gleichzeitig erzeugt der Flansch 25 des länglichen Elementes 2 eine im wesentlichen radial wirkende auf eine Umfangslinie beschränkte Druckkraft, so daß das dünnwandige Ende 43 des Schneidringes 4 unter geringer Materialverdrängung in die Innenseite 11 des Rohres 10 eingeschnitten wird.

Bei weiterer Zugkrafterhöhung durch die Zugvorrichtung wird die Sollbruchstelle an dem Kuppelelement 23 aktiviert. Der Stopfen 1 ist somit ordnungsgemäß gesetzt.

Beim laufenden Betrieb des Wärmetauschers wird weitestgehend eine Lockerung des Stopfens 1 trotz mehrfacher thermischer Wechsellasten verhindert. Bei übermäßigen Druckdifferenzen (Überdruck im abgedichteten Rohr 10) wird durch die geringfügige Hinterschneidung des dünnwandigen Endes 43 des Schneidringes 4 in die Rohrinnenseite 11 eine formschlüssige, unterstützende Fixierung des Stopfens 1 erreicht. Bei weiterer Druckerhöhung wirkt die zum Rohrinnenbereich zeigende Flanschfläche 27 selbstabdichtend und unterstützend. Bei einer tatsächlichen Drucküberbelastung würde die Flanschfläche 27 kolbenartig eine geringfügige weitere axiale Verschiebung mit Erhöhung der Dicht- und Haltewirkung des Stopfens 1 bewirken.

Insgesamt ist damit erfindungsgemäß ein Sicherheitsstopfen für abzudichtende Wärmetauscherrohre angegeben, der schnell setzbar ist und auch unter extremen Betriebsbedingungen leckdicht bleibt. Ferner wird durch die selbsttätige Nachsetzfunktion bei übermäßiger Druckbeanspruchung ein gefährliches geschoßartiges Herauslösen des Stopfens vermieden.

### Bezugszeichenliste

- 1: Stopfen
- 10: Rohr
- 11: Rohrinnenseite
- 12: Rohrplatte

- 2: längliches Element
- 21: konische Außenfläche
- 22: schlanke Ende
- 23: Kuppelelement
- 24: breites Ende
- 25: Flansch
- 26: gerundete Flanschkante
- 27: Flanschfläche

- 31: Innseite
- 32: Nut
- 33: Außenseite
- 34: Nut
- 35: Stirnfläche
- 36: Stirnfläche

- 4: Schneidring
- 41: Außenseite
- 42: Innenseite
- 43: dünnwandiges Ende
- 44: dickwandiges Ende

## Patentansprüche

1. Stopfen zur innenseitigen Abdichtung eines Rohres (10), insbesondere Wärmetauscherrohres, mit einer Abdichtbuchse (3), dessen Außenseite (33) zur Berührung der Innenseite (11) des Rohres (10) ausgebildet ist, einem in der Abdichtbuchse (3) geführten, länglichen Element (2), das eine in Längsrichtung konische Außenfläche (21) mit einem breiteren Ende (24) hat und zur radial nach außen gerichteten Weitung der Buchse (3) beim axialen Verschieben des konischen Elementes (2) ausgebildet ist, wobei das breitere Ende (24) des länglichen Elementes (2) in den abzudichtenden Rohrinnenbereich zeigt, die konische Außenfläche (21) des länglichen Elementes (2) an der Buchseninnenseite (31) gleitend anliegt und beim weiteren axialen Verschieben die Buchse (3) unter zunehmenden Druck dichtend zwischen Element (2) und Rohrinnenseite (11) einpreßt, **dadurch gekennzeichnet, daß** am breiteren Ende (24) des konischen Elementes (2) ein Flansch (25) angeordnet ist, der nur geringfügig kleineren Durchmesser als der Innendurchmesser des abzudichtenden Rohres (10) hat und zwischen Flansch (25) und Abdichtbuchse (3) ein Schneidring (4) vorgesehen ist, der beim axialen Verschieben des konischen Elementes (2) vom Flansch (25) dichtend in die Rohrinnenseite (11) eingeschnitten wird.

2. Stopfen nach Anspruch 1, **dadurch gekennzeichnet, daß** der Schneidring (4) eine im wesentlichen zylindrische Außenseite (41) und eine sich konisch zum Flansch (25) aufweitende kegelstumpfförmige Innenseite (42) aufweist, womit der Ring (4) ein dünnwandiges Ende (43) am Flansch (25) und gegenüberliegend ein dickwandiges Ende (44) hat.

3. Stopfen nach Anspruch 1 oder 2, **dadurch gekennzeichnet, daß** der Flansch (25) eine gerundete Auflaufkante (26) für das dünnwandige Ende (43) des Schneidringes (4) aufweist.

4. Stopfen nach Anspruch 1, 2 oder 3, **dadurch gekennzeichnet, daß** der Schneidring (4) am dickwandigen Ende (44) an einer Stirnfläche (35) der Abdichtbuchse (3) anliegt.

5. Stopfen nach Anspruch 1, 2 oder 3, **dadurch gekennzeichnet, daß** Schneidring (4) und Abdichtbuchse (3) einstückig ausgebildet sind.

6. Stopfen nach einem der vorangehenden Ansprüche, **dadurch gekennzeichnet, daß** der Schneidring (4) oder der Schneidring (4) und die Abdichtbuchse (3) aus elastisch deformierbarem Material mit gegenüber der Festigkeit des konischen Elementes (2) geringerer Festigkeit hergestellt sind.

7. Stopfen nach einem der vorangehenden Ansprüche, **dadurch gekennzeichnet, daß** die Abdichtbuchse (3) auf ihrer Innenseite (31) wenigstens eine in der Radialebene umlaufende Nut (32) aufweist.

8. Stopfen nach einem der vorangehenden Ansprüche, **dadurch gekennzeichnet, daß** die Abdichtbuchse (3) auf ihrer Außenseite (33) wenigstens eine in einer Radialebene umlaufende Nut (34) aufweist.

9. Abdichtverfahren für ein Wärmetauscherrohr mit einem Stopfen gemäß einem der Ansprüche 1 bis 8 mit den Schritten:
- Einsetzen des Stopfens in seiner nicht expandierten Grundstellung in das abzudichtende Rohr am Rohrende,
- gleitendes axiales Verschieben des länglichen Elementes in der ortsfest gehaltenen Abdichtbuchse, wobei
-- der Schneidring durch den Flansch dichtend in die Rohrinnenwand eingeschnitten und
-- die Abdichtbuchse durch die konische Oberfläche des länglichen Elementes dichtend aufgeweitet wird.

10. Abdichtverfahren nach Anspruch 9, **dadurch gekennzeichnet, daß** die Zugkraft beim axialen Verschieben bis zu einer Maximallast aufgebracht wird.

## Claims

1. A plug for internally sealing a pipe (10), in particular a heat-exchanger pipe, comprising a sealing sleeve (3), the outer surface (33) of which is intended to contact the inner surface (11) of the pipe (10), an elongate component (2) guided in the sealing sleeve (3) and having a conical outer surface (21) in the longitudinal direction with a broader end (24) and having the function of radially expanding the sleeve (3) during axial displacement of the conical component (2), wherein the broader end (24) of the elongate component (2) faces into the inner pipe region to be sealed, the conical outer surface (21) of the elongate component (2) rests slidingly against the inner surface (31) of the sleeve and, during further axial displacement, compresses the sleeve (3) under increasing pressure so as to form a seal between the component (2) and the inner surface (11) of the pipe,
**characterised in that** a flange (25) is arranged at the broader end (24) of the conical component (2) and has only a slightly smaller diameter than the inner diameter of the pipe (10) to be sealed, and a cutting ring (4) is provided between the flange (25) and the sealing sleeve (3) and, during axial displacement of the conical component (2), is cut into the inner surface (11) of the pipe by the flange (25) so as to form a seal.

2. A plug according to claim 1, **characterised in that** the cutting ring (4) has a substantially cylindrical outer surface (41) and a frusto-conical inner surface (42) widening conically towards the flange (25), whereby the ring (4) has a thin-walled end (43) on the flange (25) and an opposing thick-walled end (44).

3. A plug according to claim 1 or 2, **characterised in that** the flange (25) has a rounded abutting edge (26) for the thin-walled end (43) of the cutting ring (4).

4. A plug according to claim 1, 2 or 3, **characterised in that** the thick-walled end (44) of the cutting ring (4) rests against an end face (35) of the sealing sleeve (3).

5. A plug according to claim 1, 2 or 3, **characterised in that** the cutting ring (4) and the sealing sleeve (3) are formed in one piece.

6. A plug according to any one of the preceding claims, **characterised in that** the cutting ring (4) or the cutting ring (4) and the sealing sleeve (3) are manufactured from elastically deformable material with lower resistance than the resistance of the conical component (2).

7. A plug according to any one of the preceding claims, **characterised in that** the sealing sleeve (3) has on its inner surface (31) at least one groove (32) extending circumferentially in a radial plane.

8. A plug according to any one of the preceding claims, **characterised in that** the sealing sleeve (3) has on its outer surface (33) at least one groove (34) extending circumferentially in a radial plane.

9. A method of sealing a heat-exchanger pipe with a plug according to any one of claims 1 to 8, comprising the following steps:
- the plug is inserted in its non-expanded starting position into the end of the pipe to be sealed,
- the elongate component slides axially in the fixed sealing sleeve, during which
-- the cutting ring is cut into the inner wall of the pipe by the flange so as to form a seal, and
-- the sealing sleeve is expanded by the conical surface of the elongate component so as to provide a seal.

10. A sealing method according to claim 9, **characterised in that** the tensile force during axial displacement is applied up to a maximum load.

## Revendications

1. Bouchon pour l'obturation interne étanche d'un tube (10), notamment un tube d'échangeur thermique, comprenant :
- une douille d'obturation (3), dont la surface externe (33) est conçue pour être en contact avec la surface interne (11) du tube (10),
- un élément longitudinal allongé (2) coulissant dans la douille(3), présentant une surface externe (21) conique en direction longitudinale et une extrémité plus large (24), et constitué pour produire en coulissant axialement une expansion radiale de la douille (3) vers l'extérieur
- l'extrémité plus large (24) de l'élément (2) étant amenée dans la zone interne du tube qui doit être obturée avec étanchéité, la surface externe conique (21) de l'élément allongé (2) venant s'appliquer en glissant sur la surface interne (31) de la douille et, en continuant à coulisser axialement, mettant la douille (3) en pression croissante en assurant l'étanchéité entre l'élément (2) et la surface interne (11) du tube,
**caractérisé en ce qu'**
à l'extrémité plus large (24) de l'élément conique (2) se trouve une bride (25) de diamètre à peine inférieur au diamètre interne du tube (10) à obturer et entre cette bride (25) et la douille d'obturation (3) il est prévu une bague de coupe (4) que la bride (25), lors du coulissement axial de l'élément conique (2), fait pénétrer avec étanchéité dans la surface interne (11) du tube.

2. Bouchon selon la revendication 1,
**caractérisé en ce que**
la bague de coupe (4) a une surface externe (41) essentiellement cylindrique tandis que sa surface interne (42) a la forme d'un cône s'élargissant en direction de la bride (25), la bague (4) présentant le long de la bride (25) une extrémité (43) à paroi mince tandis que l'extrémité opposée (44) possède une paroi épaisse.

3. Bouchon selon l'une quelconque des revendications 1 ou 2,
**caractérisé en ce que**
la bride (25) présente un bord d'accostage (26) arrondi destiné à l'extrémité (43) à paroi mince de la bague de coupe (4).

4. Bouchon selon l'une quelconque des revendications 1, 2 ou 3,
**caractérisé en ce que**
la bague de coupe (4), par son extrémité (44) à paroi épaisse est appliquée sur une face frontale (35) de la douille d'obturation (3).

5. Bouchon selon l'une quelconque des revendications 1, 2 ou 3,
**caractérisé en ce que**
la bague de coupe (4) et la douille d'obturation (3) forment une seule pièce.

6. Bouchon selon l'une quelconque des revendications précédentes,
**caractérisé en ce que**
la bague de coupe (4), ou la bague de coupe (4) et la douille d'obturation (3) sont fabriquées dans un matériau déformable élastiquement et dont la résistance est inférieure à celle de l'élément conique (2).

7. Bouchon selon l'une quelconque des revendications précédentes,
**caractérisé en ce que**
la douille d'obturation (3) présente sur sa surface interne (31) au moins une rainure périphérique (32) située dans un plan radial.

8. Bouchon selon l'une quelconque des revendications précédentes,
**caractérisé en ce que**
la douille d'obturation (3) présente sur sa surface externe (33) au moins une rainure périphérique (34) située dans un plan radial.

9. Procédé d'obturation d'un tube d'échangeur thermique au moyen d'un bouchon selon l'une quelconque des revendications 1 à 8, présentant les étapes suivantes :
- le bouchon, dans son état de base non expansé, est introduit à l'extrémité du tube à obturer,
- on fait coulisser axialement l'élément allongé dans la douille d'obturation maintenue fixe d'où il résulte que la bague de coupe, sous l'action de la bride, vient entailler de manière étanche la paroi interne du tube et que la douille d'obturation est élargie avec étanchéité par la surface conique de l'élément allongé.

10. Procédé d'obturation selon la revendication 9,
**caractérisé en ce que**
la force de traction lors du coulissement axial est appliquée jusqu'à une charge maximale.
